# EUROPÄISCHE PATENTSCHRIFT

(11) **EP 1 993 798 B1**
(45) Veröffentlichungstag und Bekanntmachung des Hinweises auf die Patenterteilung: **04.05.2011**
(21) Anmeldenummer: 07723221.3
(22) Anmeldetag: 13.03.2007
(51) Int. Cl.: B29B 9/06, B29B 9/16

(54) **VERFAHREN ZUR HERSTELLUNG EINES NICHT-KLEBENDEN GRANULATS AUS EINEM POLYESTERMATERIAL UND ZUR WEITERVERARBEITUNG EINES SO HERGESTELLTEN GRANULATS**
METHOD FOR PRODUCING NON-STICKING GRANULES FROM A POLYESTER MATERIAL AND FOR THE FURTHER PROCESSING OF GRANULES PRODUCED IN THIS WAY
PROCEDE DE FABRICATION D'UN GRANULE NON COLLANT A PARTIR D'UN MATERIAU A BASE DE POLYESTER ET DE POST-TRAITEMENT D'UN GRANULE AINSI OBTENU

(30) Priorität: 13.03.2006 CH 395062006
(43) Veröffentlichungstag der Anmeldung: 26.11.2008
(73) Patentinhaber: Uhde Inventa-Fischer AG, 7013 Domat/Ems (CH)
(72) Erfinder: HANIMANN, Kurt, CH-7415 Rodels/Pratval (CH); STIBAL, Werner, CH-7000 Chur (CH)
(74) Vertreter: Pfenning, Meinig & Partner GbR
(86) Internationale Anmeldenummer: PCT/EP2007/002211
(87) Internationale Veröffentlichungsnummer: WO 2007/104536

(56) Entgegenhaltungen:
- EP-A2- 1 522 395
- DE-A1-102004 050 356
- US-A1- 2005 110 182

## Beschreibung

### TECHNISCHES GEBIET

Die vorliegende Erfindung betrifft ein Verfahren nach dem Anspruch 1 zur Herstellung eines nicht-klebenden Granulats aus einem Polyestermaterial, bei welchem das Polyestermaterial als Schmelze in einen Kühlwasserstrom eingeleitet und nach Durchlaufen einer Kühlstrecke vom Kühlwasser abgetrennt wird.

Gegenstand der Erfindung ist auch die Verwendung eines so hergestellten Granulats nach dem Anspruch 15.

Bei dem Polyestermaterial kann es sich insbesondere um .Polyethylenterephthalat oder dessen modifizierte Copolymere handeln, mit Modifizierungsanteilen auf der Säureseite, z.B. von Isophthalsäure, oder auf der Diolseite, z.B. von Cyclohexandimethanol.

### STAND DER TECHNIK

Von einem Verfahren der vorgenannten Art geht beispielsweise auch die DE 103 49 016 B4 aus, wobei nach der Lehre dieses Dokuments im Anschluss an die Granulatbildung eine so genannte Kristallisationsphase oder Nachkristallisation für erforderlich gehalten wird.

Wie sich DE 198 48 245 A1 entnehmen lässt, ist Polyestergranulat anfänglich im Wesentlichen amorph und transparent. In diesem Zustand neigt es bei einer Weiterverarbeitung in fester Phase am und oberhalb seines Glasumwandlungspunktes zum Verkleben. Durch eine Erhöhung seiner Kristallinität, die an einer weißen Einfärbung zu erkennen ist, lässt sich das Verkleben vermeiden. Nach DE 10 2004 015 515 A1 ist hierzu ein Kristallisationsgrad von mindestens 38 % erforderlich.

Bei der DE 103 49 016 B4 wird die Nachkristallisation unter Ausnutzung der in den Granulatkörnern direkt nach der Granulierung noch enthaltenen Wärmeenergie ausgeführt. Zur Vermeidung eines Verklebens der Granulatkörner bis zum Erreichen des gewünschten Kristallisationsgrades wird vorgeschlagen, sie zu rütteln oder mit Vibrationen zu beaufschlagen, z.B. durch Förderung über einen Vibrations- oder Schwingförderer.

Ein hoher Kristallisationsgrad ist bei der Weiterverarbeitung des Granulats jedoch nicht immer erwünscht, weil dadurch die zum Aufschmelzen des Granulats benötigte Energie erhöht wird.

Dokument EP-A-1 522 395 zeigt die Merkmale des Oberbegriffs des Anspruchs 1.

### DARSTELLUNG DER ERFINDUNG

Bei den bekannten Verfahren bedeutet die Nachkristallisation zum Erhalt eines ausreichend kristallinen, nicht-klebenden Granulats sowie die Maßnahmen zur Verhinderung eines Verklebens der Granulatkörner bereits bei der Nachkristallisation einen nicht unerheblichen verfahrenstechnischen sowie apparativen Aufwand. Ferner stellt sich in Abhängigkeit von der Granulatgröße zwangsläufig eine bestimmte Temperatur des Granulats ein. Der Erfindung liegt daher die Aufgabe zugrunde, das eingangs genannte Verfahren so zu verbessern, dass es rationeller und apparativ mit weniger Aufwand ausführbar ist. Außerdem sollen hohe Kristallisationsgrade > 45 % vermieden werden können.

Erfindungsgemäß wird dies gemäß Anspruch 1 dadurch erreicht, dass die Verweilzeit des Polyestermaterials in der Kühlstrecke 0.2 - 5 sec beträgt und dass das Kühlwasser entlang der Kühlstrecke einen Druck von mindestens 2 bar aufweist. Je nach Verfahrensführung kann das Polyestermaterial innerhalb des Kühlwassers als Strang oder als Granulat vorliegen.

Für das so erhaltene Granulat ist eine Nachkristallisation nicht, zumindest nicht in jedem Fall, erforderlich. Es hat sich gezeigt, dass das Granulat auch ohne Nachkristallisation und mechanische Bewegung nicht verklebt, wenn kein zusätzlicher externer Energieeintrag erfolgt. Sogar bei einer Erwärmung unter Druck konnten keine Verklebungen festgestellt werden. Das Granulat ist für eine direkte Weiterverarbeitung ohne zusätzliche Kristallisation gegebenenfalls unter Ausnutzung seiner noch hohen Temperatur in Gasbehandlungen, wie Festphasennachkondensationsreaktoren, Konditionierungsreaktoren zur Trocknung, Entgasung und/oder De-Aldehydysierung oder Kristallisationsvorrichtungen (falls doch ein höherer Kristallisationsgrad benötigt wird) geeignet. Als Beispiele für die Weiterverarbeitung können auch pneumatische Transporte sowie Zwischenlagerung in Silos oder in warmfesten Gebinden erwähnt werden.

Es ist bekannt, dass bei sehr hohen Temperaturgradienten Wasser ein zu kühlendes Objekt nicht benetzen kann (Leidenfrost). Unter atmosphärischen Bedingungen oder leichtem Überdruck tritt dieses Phänomen auch bei Polyesterschmelze auf, wenn diese in Kühlwasser eingeleitet wird. Es bildet sich an der Oberfläche des Polyestermaterials eine Dampfschicht aus, die isolierend wirkt und die Kühlung des Polyestermaterials behindert. Verdampfung und Kondensation führen in der Grenzschicht zudem zu instationären Zuständen, welche die Oberfläche des Polyestermaterials stark aufrauen (Kraterbildung). Die raue Oberfläche fördert das Verkleben der fertigen Granulatkörner. Dieses führt zu unkontrollierter Kristallisation und erhöhtem Abrieb in nachfolgenden mechanischen Behandlungen, wodurch dort Störungen und Reinigungszyklen erforderlich werden sowie Materialverlust auftritt. Weiterhin kann es wegen erneutem Durchschreiten des Glasumwandlungspunktes zu Agglomeration der Granulatkörner kommen, die zu weiteren Störungen und Qualitätseinbußen führt.

Erstaunlicherweise wurde durch die Bedingungen gemäß Anspruch 1 gefunden, dass die Verdampfung und Oberflächenkavitation an den Granulatkörnern in dem Maße kontrolliert werden kann, dass die Oberfläche der Körner nunmehr eine Orangenhautstruktur annimmt, die die ohnehin geringen Berührungsflächen der sphärischen Körner weiter verkleinert, so dass eine Agglomeration auch bei weiterer Wärmebehandlung nicht mehr auftritt. Der direkte schockartige Kühlwasserkontakt erzwingt die kontrollierte Oberflächenstrukturbildung und erlaubt damit erst eine auf den Weiterbehandlungsprozess abgestimmte Abkühlung der Schmelze und einen steuerbaren Kristallisationsgrad, der im Bereich von 8 bis 45 % liegen kann.

Die einsetzende Kristallisation vom Kern der Granulatkörner aus, wegen der dort herrschenden höheren Temperatur der erstarrenden Schmelze, führt zu Spannungen und Schrumpfungen innerhalb der Granulatkörner, die sich in Form von Abstoßeffekten gegenüber nahe liegenden Körnern darstellen und so weiterhin der Agglomeration entgegen wirken.

Um ein Verkleben der fertigen Granulatkörner zu vermeiden, genügt bereits eine sehr kurze Verweilzeit des Polyestermaterials unter den erwähnten Druckbedingungen in der Kühlstrecke von lediglich 0.2 -5.0 sec.

Durch Begrenzung der Verweilzeit unter den erwähnten Druckbedingungen in der Kühlstrecke auf 5 sec, bevorzugt 2 sec, wird andererseits ein niedriger Kristallisationsgrad des fertigen Granulats von weniger als 10 % erreicht. Das fertige Granulat ist im Wesentlichen amorph, was an seiner Transparenz erkennbar ist. Bevorzugt weist das fertige Granulat dabei einen amorphen Anteil von höchstebs 92 %, mindestens jedoch 55 % auf. Auch weist das Polyestermaterial nach Abtrennung des Kühlwassers noch eine für eine direkte Weiterverarbeitungen, wie z.B. eine Festphasennachkondensation oder Trocknung, vorteilhaft hohe Temperatur auf.

Bevorzugte Ausführungsarten des erfindungsgemäßen Verfahrens sind in den abhängigen Ansprüchen 2 - 13 gekennzeichnet.

So ist es bevorzugt, die Verweilzeit innerhalb engerer Grenzen zwischen 0.2 bis 2 sec, besonders bevorzugt zwischen 0.4 sec und 0.8 sec zu wählen. Dasselbe gilt für den Druck, der bevorzugt zwischen 3 bar und 6 bar eingestellt wird. Ein Druck höher als 6 bar ist zum Erreichen des erfindungsgemäßen Effekts im Allgemeinen nicht nötig und würde Probleme bei der apparativen Auslegung mit sich bringen.

Nach Durchlaufen der Kühlstrecke wird der Druck des Kühlwassers schnell entspannt und dann das Kühlwasser vom Polyestermaterial abgetrennt. Die Entspannung kann in einer Drosselstrecke in Form eines Rohrleitungsstücks mit reduziertem Querschnitt oder von Strömungskanälen erfolgen. Alternativ können speziell geformte Ventile, wie z.B. Quetschventile, benutzt werden.

Hinter der Drosselstrecke ist die Verdampfung an der Oberfläche des Polyestermaterials erwünscht, weil dies die Abtrennung des Kühlwassers unterstützt und durch Ausbildung eines isolierenden Dampffilms eine weitere, nicht mehr erforderliche sowie gegebenenfalls auch nicht mehr erwünschte Abkühlung des Polyestermaterials behindert. Durch Wahl der Temperatur des Kühlwassers mit 80 °C - 110 °C, bevorzugt 85°C bis 95 °C, nahe am atmosphärischen Siedepunkt werden diese Effekte zusätzlich unterstützt. Andererseits werden Wasserverluste durch Verdampfung minimal gehalten.

Für verschiedene Weiterverarbeitungsverfahren ist der Schälbewegung der Messer an der Düsenplatte im Zusammenwirken mit der Oberflächenspannung der erstarrenden Schmelze eine mittlere Temperatur des fertigen Granulats im Bereich 90 °C bis 220 °C, bevorzugt 150 °C - 220 °C, von Vorteil. Diese Temperatur hängt unter anderem von der Verweilzeit des Polyestermaterials in der Kühlstrecke ab, so dass sie durch geeignete Wahl dieser Verweilzeit eingestellt werden kann.

Was die Granulierung anbetrifft so kann der mindestens eine Strang des schmelzflüssigen Polyestermaterials unmittelbar nach seinem Austritt in den Kühlwasserstrom und damit noch vor Durchlaufen der Kühlstrecke zerschnitten werden, was z.B. mit Hilfe einer Lochplatte, einem angestellten rotierenden Messersatz oder ähnlichem erfolgen kann. Der Durchmesser der Löcher liegt dabei im mm-Bereich.

Die Schmelze, die bevorzugt als mindestens ein schmelzflüssiger Strang ausgebildet ist, kann auch erst nach einer Verstreckung und Abkühlung im Kühlwasser granuliert werden. Ein Schneiden des Strangs erst nach der Abtrennung des Kühlwassers wäre ebenfalls möglich. Die entstehenden Granulatkörner weisen dabei typischerweise ein Gewicht zwischen 10 und 20 mg auf.

Zur Abtrennung des Polyestermaterials vom Kühlwasser kann ein Wasser-Dampfabscheider eingesetzt werden, dem die bereits erwähnte Drosselstrecke zur Entspannung des Kühlwasserdrucks vorgeschaltet ist. Im Falle einer Unterwasser-Granulierung kann ein handelsüblicher Zentrifugalabscheider eingesetzt werden. Wegen der Dampfbildung nach der Druckentlastung genügt aber auch ein einfaches Bogensieb mit einer Absaugung, an dem Dampf und Wasser von den Granulatkörnern getrennt und durch Luft oder ein Inertgas ersetzt werden. Diese Ausführungsform ist auch an einem Strang möglich, der erst anschließend geschnitten wird.

Im Falle der direkten Unterwassergranulierung, die bevorzugt ist, kann die Verweilzeit des Polyestermaterials in der Kühlstrecke durch Variation des Kühlwasserstromes, z.B. durch Steuerung der Wasserpumpendrehzahl, in der Kühlstrecke eingestellt werden, da die Granulatkörner vom Kühlwasserstrom befördert werden. Auf einfache Weise ist die Einstellung des Kühlwasserstromes in der Kühlstrecke dadurch möglich, dass das Kühlwasser zwischen der Kühlstrecke und einer Bypassleitung zur Kühlstrecke aufgeteilt und vor der Drosselstrecke wieder zusammengeführt wird. Indem eine konstante Wassermenge über die Drosselstrecke geführt wird, bleibt der Druck in der Kühlstrecke bei einer Veränderung der Aufteilung konstant.

Alternativ hierzu ist es auch möglich, dass das Polyestermaterial nach Abkühlung im Kühlwasser granuliert wird. Dabei kann zusätzlich eine Verstreckung des Polyestermaterials, das dann innerhalb der Kühlstrecke zumindest teilweise als Strang vorliegt, erfolgen.

Eine weitere alternative Ausführungsform sieht vor, dass das Polyestermaterial erst nach der Abtrennung des Kühlwassers unter Bildung von annähernd zylinderförmigen Granulatkörnern granuliert wird. Dazu durchläuft das Polyestermaterial die komplette Kühlstrecke als Strang, die Granulierung erfolgt also erst im Anschluss an die Kühlstrecke.

Erfindungsgemäß wird ebenso mit Anspruch 14 ein Verwendungszweck des Verfahrensproduktes des Verfahrens nach einem der Ansprüche 1 bis 13 angegeben, wobei das Verfahrensprodukt direkt einem Festphasennachkondensationsreaktor oder Trockner, bevorzugt z.B. einem Turm- und/oder Schachttrockner, mit statischem Fliessbett zugeführt wird.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: ein Diagramm einer ersten Ausführungsart der Erfindung mit Unterwasserschnitt; und
- Fig. 2: ein entsprechendes Diagramm einer zweiten Ausführungsart der Erfindung mit Trocken- schnitt.

### WEGE ZUR AUSFÜHRUNG DER ERFINDUNG

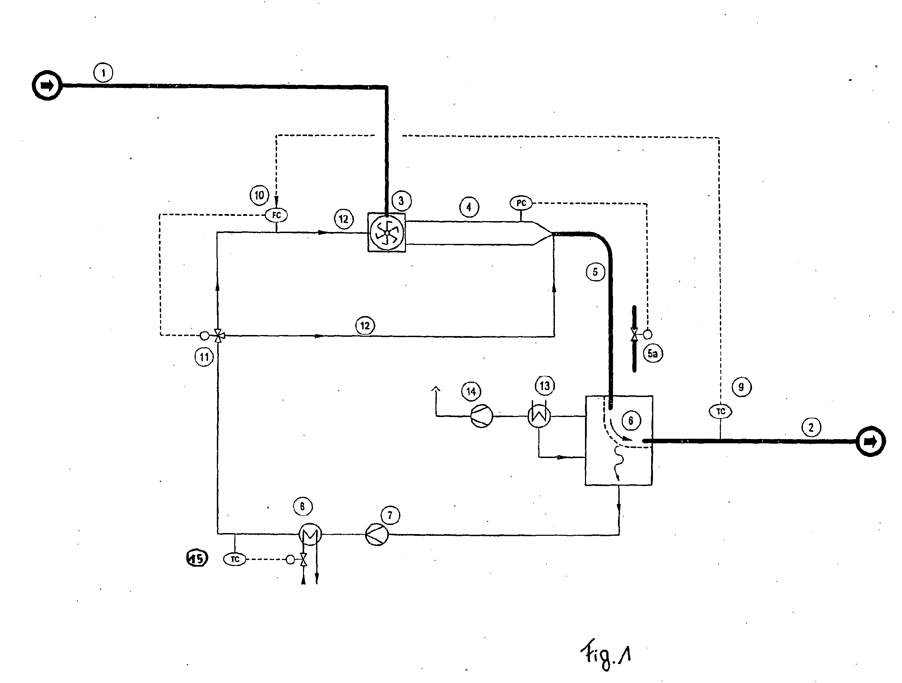

In beiden Figuren bezeichnet 1 den Schmelzeeintritt, 2 den Granulataustritt und 3 eine Schneidkammer. Ein Kühlwasserkreislauf umfasst in Reihe eine Kühlstrecke 4 von typisch 0.5 - 3 m Länge, eine Drosselstrecke 5, einen Wasser- und Dampfabscheider 6 und wird durch eine Wasserzirkulationspumpe 7 in Gang gehalten. Bei dem Wasser- und Dampfabscheider 6 kann es sich um ein einfaches Bogensieb oder einen handelsüblichen Zentrifugalabscheider handeln. Im Kühlwasserkreislauf ist weiter ein Wärmetauscher 8 enthalten, mit dem die Temperatur des Kühlwassers mittels einer Temperaturregelung 15 eingestellt und konstant gehalten werden kann. Mit 9 ist eine Granulattemperaturregelung bezeichnet, die mit einer Wassermengenregelung 10 in Verbindung steht. Die Wassermengenregelung wirkt auf ein Bypass-Regelventil 11 ein, mit dem die Aufteilung des Kühlwassers auf die Kühlstrecke 4 und einen Bypass 12 einstellbar ist. Der Wasser- und Dampfabscheider 6 ist mit einem Absauggebläse 14 versehen, dem ein Dampfkondensator 13 vorgeschaltet ist. Die Wasserzirkulationspumpe 7 baut im beschriebenen Kühlwasserkreislauf einen Druck auf, der so eingestellt wird, dass er entlang der Kühlstrecke 4 größer als 2 bar ist. Als Variante für die Einstellung und Konstanthaltung des Drucks ist in Fig. 1 noch eine Druckregelung 16 vorgesehen, die auf ein Regelventil 5a der Drosselstrecke 5 einwirkt.

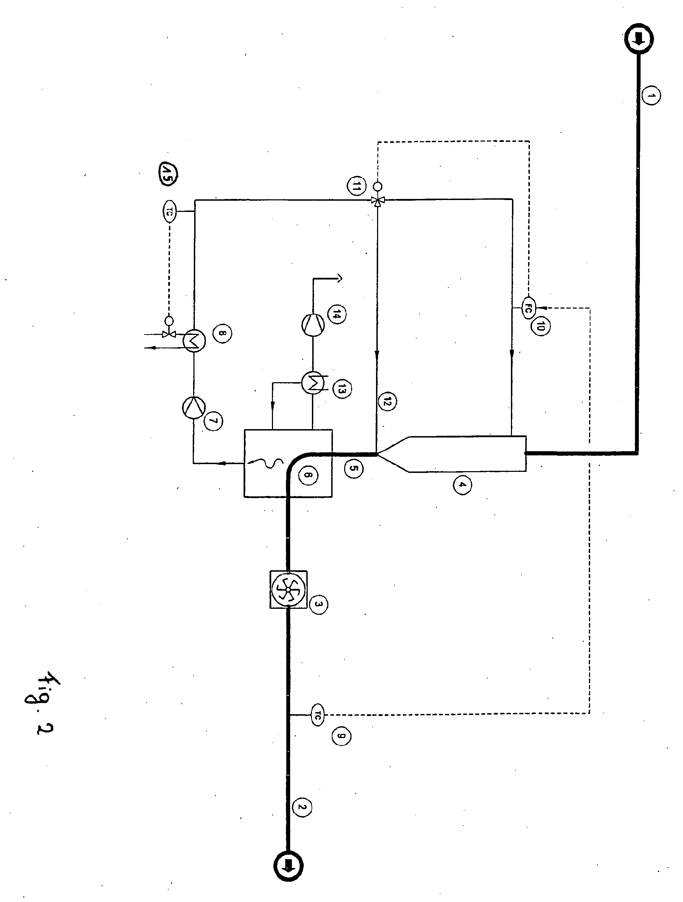

Die beiden Ausführungsarten von Fig. 1 und Fig. 2 unterscheiden sich in der Position der Schneidkammer 3. Bei der Ausführungsart von Fig. 1 befindet sich die Schneidkammer 3 im Kühlwasserkreislauf im Bereich des Schmelzeeintritts 1 unmittelbar vor der Kühlstrecke 4 und wird.von Kühlwasser durchströmt. Der Kühlwasserdruck in ihr ist wie entlang der Kühlstrecke 4 größer als 2 bar. Bei der Ausführungsart von Fig. 2 befindet sich die Schneidkammer 3 außerhalb des Kühlwasserkreislaufs zwischen dem Wasser- und Dampfabscheider 6 und dem Granulat-Austritt 2 und ist demzufolge trocken.

Bei der Ausführungsart von Fig. 1 tritt das schmelzflüssige Polyestermaterial aus bevorzugt mehreren Düsenlöchern unter Ausbildung entsprechend vieler Schmelzestränge in die Schneidkammer aus, wobei die Schmelzestränge sofort unter Wasser mit einem Schneidrotor, z.B. einer rotierenden Lochplatte, auf die geforderte Granulatgröße geschnitten werden. Man spricht hier auch von Heißabschlag. Auf Grund der Schälbewegung der Messer an der Düsenplatte im Zusammenwirken mit der Oberflächenspannung der erstarrenden Schmelze bilden sich hierbei annähernd kugelförmige Granulatkörner. Das Granulat wird durch das Zirkulationswasser direkt in die Kühlstrecke 4 gefördert. In der Schneidkammer 3 und entlang der Kühlstrecke 4 herrscht, wie bereits ausgeführt, ein Kühlwasserdruck größer als 2 bar vor. Dieser Wasserdruck wird in der anschließenden Drosselstrecke 5 auf Umgebungsdruck entspannt. Die Drosselung kann durch eine angepasste Auslegung des Rohrleitungsquerschnitts in Abstimmung mit der Wasserumwälzmenge erfolgen oder durch ein für das 2-Phasen-Gemisch geeignetes Regelventil 5a, wie z.B. einem Quetschventil, wodurch dann auch die erwähnte Druckregelung in der Kühlstrecke möglich wäre. Nach der Entspannung verdampft das Wasser direkt an der noch heißen Oberfläche der Granulatkörner und kann dadurch mit dem Wasser- und Dampfabscheider 6 einfach abgetrennt werden. Der entstehende Wasserdampf wird mit dem Absauggebläse 14 zusammen mit Umgebungsluft abgesogen und im Dampfkondensator 13 kondensiert.

Die erfindungsgemäße Schockkühlung unter Überdruck von mindestens 2 bar findet in der Schneidkammer 3, der Kühlstrecke 4 sowie gegebenenfalls teilweise auch noch in der Drosselstrecke 5 statt, wobei allerdings die verweilzeiten in der Schneidkammer 3 und der Drosselstrecke 5 auf Grund der geometrischen Verhältnisse gegenüber der Verweilzeit in der Kühlstrecke 4 klein sind. Je nach Dauer der Schockkühlung werden die Granulatkörner mehr oder weniger abgekühlt. Durch Einstellen der Verweilzeit in der Kühlstrecke 4 mittels der Wassermengenregelung 10 ist es somit möglich, die Temperatur des fertigen Granulats kontrolliert einzustellen, was auch bei kleinem Iecrndurchmesser funktioniert. Der Granulattemperaturregler 9 gibt hierbei als Führungsregler den Sollwert der Wassermengenregelung in Form einer Kaskadenregelung vor.

Bei der Ausführungsart von Fig. 2 werden bevorzugt ebenfalls mehrere Stränge abgezogen, treten hier jedoch direkt in die Kühlstrecke 4 ein, wo sie analog zum vorbeschriebenen Granulat eine Schockkühlung erfahren. Der Schnitt zu zylindrischem Granulat erfolgt erst nach der Wasserabtrennung in der dem Wasser- und Dampfabscheider 6 nachgeordneten Schneidkammer 3. die Drosselstrecke 5 kann die Form enger Kanäle aufweisen, durch die die Stränge geführt werden. Im Übrigen entspricht die Verfahrensführung derjenigen der Ausführungsart von Fig. 2.

### BEISPIELE

Die in der nachstehenden Tabelle angegebenen Beispiele A - D betreffen die Herstellung von Polyester-Granulat unter Anwendung der vorstehend.beschriebenen Ausführungsart gemäß Fig. 1. Beispiel E ist ein Vergleichsbeispiel, bei welchem zur Granulierung ein Unterwasserstranggranulator eingesetzt wurde und der Kühlwasserdruck entlang der Kühlstrecke Umgebungsdruck entsprach. In allen Beispielen wurde die Schmelze durch Aufschmelzen eines PET-Granulats bei 290°C hergestellt.

| Beispiel | Schmelze-Fluss | Granulat-größe | Wasserumwälzung | Wassertemperatur | Schneid-kammerdruck | Verweilzeit Schockkühlung | mittlere Granulat-temperatur |
|---|---|---|---|---|---|---|---|
| | kg/h | mg | m³/h | °C | barg | sec | °C |
| A | 110 | 19 | 15 | 97 | 4 | 0.5 | 180 |
| B | 110 | 35 | 17 | 99 | 5.1 | 0.45 | 215 |
| C | 110 | 12 | 17 | 102 | 5 | 0.45 | 175 |
| D | 100 | 15 | 12 | 96 | 4 | 0.5 | 160 |
| E | 100 | 15 | 12 | 96 | 0 | 0.5 | 160 |

In den Beispielen A - D zeigten die aus dem Granulat-Austritt austretenden Granulatkörner auch bei adiabatischer Direktabfüllung kein Verkleben. Im Beispiel D wurde das Granulat zusätzlich mit 3 bar Druck belastet und klebte auch dann nicht.

Die mit dem Vergleichsbeispiel E gewonnenen Granulatkörner verklebten demgegenüber sofort nach dem Granulat-Austritt zu faustgroßen Klumpen.

### Bezeichnungsliste

- 1: Schmelzeeintritt
- 2.: Granulat-Austritt
- 3.: Schneidkammer
- 4.: Kühlstrecke
- 5.: Drosselstrecke; 5a Drosselventil
- 6.: Wasser- und Dampfabscheider
- 7.: Wasserzirkulationspumpe
- 8.: Wärmetauscher für Kreislaufwasser
- 9.: Granulattemperaturregelung
- 10.: Wassermengenregelung
- 11.: Bypass-Regelventil
- 12.: Bypass zu Kühlstrecke
- 13.: Dampfkondensator
- 14.: Absauggebläse Wasserabscheider
- 15.: Temperaturregelung
- 16.: Druckregelung

## Patentansprüche

1. Verfahren zur Herstellung eines nicht-klebenden Granulats oberhalb der Glasumwandlungstemperatur aus einem Polyestermaterial, bei welchem das Polyestermaterial als Schmelze in einen Kühlwasserstrom eingeleitet und nach Durchlaufen einer Kühlstrecke vom Kühlwasser abgetrennt wird, wobei das Kühlwasser entlang der Kühlstrecke eine Druck von mindestens 2 bar aufweist, **dadurch gekennzeichnet, dass** die Verweilzeit des Polyestermaterials in der Kühlstrecke 0.2 - 5.0 sec beträgt.

2. Verfahren nach Anspruch 1, **dadurch gekennzeichnet, dass** die Verweilzeit des Polyestermaterials in der Kühlstrecke 0.2-2.0 sec, bevorzugt 0.4 - 0.8 sec beträgt.

3. Verfahren nach einem der Ansprüche 1 oder 2, **dadurch gekennzeichnet, dass** das Kühlwasser entlang der Kühlstrecke einen Druck von 3 - 6 bar aufweist.

4. Verfahren nach einem der Ansprüche 1 - 3, **dadurch gekennzeichnet, dass** die Temperatur des Kühlwassers 80 °C - 110 °C, bevorzugt 85 °C bis 95 °C, beträgt.

5. Verfahren nach einem der Ansprüche 1 - 4, **dadurch gekennzeichnet, dass** die Verweilzeit des Polyestermaterials so gewählt wird, dass das Polyestermaterial nach der Abtrennung des Kühlwassers eine Temperatur von 90 °C - 220 °C aufweist.

6. Verfahren nach einem der Ansprüche 1 - 5, **dadurch gekennzeichnet, dass** zur Abtrennung des Polyestermaterials vom Kühlwasser eine Wasser-Feststoff-Trennvorrichtung eingesetzt wird, welcher eine Drosselstrecke zur Entspannung des Kühlwasserdrucks vorgeschaltet ist.

7. Verfahren nach einem der Ansprüche 1 - 6, **dadurch gekennzeichnet, dass** der Kühlwasserstrom in der Kühlstrecke durch einen einstellbaren Bypass zur Kühlstrecke einstellbar ist.

8. Verfahren nach einem der Ansprüche 1 - 7, **dadurch gekennzeichnet, dass** das Polyestermaterial unmittelbar nach seinem Eintritt in den Kühlwasserstrom unter Bildung von annähernd kugelförmigen Granulatkörnern granuliert wird.

9. Verfahren nach einem der Ansprüche 1 - 7, **dadurch gekennzeichnet, dass** das Polyestermaterial nach Abkühlung im Kühlwasser granuliert wird.

10. Verfahren nach einem der Ansprüche 1 -7, **dadurch gekennzeichnet, dass** das Polyestermaterial erst nach der Abtrennung des.Kühlwassers unter Bildung von annähernd zylinderförmigen Granulatkörnern granuliert wird.

11. Verfahren nach einem der Ansprüche 8 - 10, **dadurch gekennzeichnet, dass** bei dem Granulat ein Oberflächenabschrecken oberhalb der Glasumwandlungstemperatur durchgeführt wird.

12. Verfahren nach einem der vorhergehenden Ansprüche; **dadurch gekennzeichnet, dass** das erzeugte Granulat einen amorphen Anteil von mindestens 55 % und höchstens 92 % besitzt.

13. Verfahren nach einem der vorhergehenden Ansprüche, **dadurch** gekenntzeichnet, dass die Granulierung über eine Lochplatte mit angestelltem rotierendem Messersatz erfolgt.

14. Verfahren nach einem der vorhergehenden Ansprüche, **dadurch gekennzeichnet, dass** die Schmelze als mindestens ein Schmelzstrang ausgebildet ist.

15. Verwendung des mit dem Verfahren nach einem der Ansprüche 1 - 14 hergestellten Produktes zur direkten Zuteilung in einen Festphasennachkondensationsreaktor oder Trockner, bevorzugt einen Turm- und/oder Schachttrockner.

## Claims

1. Method for the production of a non-adhering granulate above the glass-transition temperature comprising a polyester material in which the polyester material is introduced into a cooling water flow as a melt and is separated from the cooling water after passing through a cooling stretch, the cooling water having a pressure of at least 2 bar along the cooling stretch, **characterised in that** the dwell time of the polyester material in the cooling stretch is 0.2 - 5.0 sec.

2. Method according to claim 1, **characterised in that** the dwell time of the polyester material in the cooling stretch is 0.2 - 2.0 sec, preferably 0.4 - 0.8 sec.

3. Method according to one of the claims 1 or 2, **characterised in that** the cooling water has a pressure of 3 - 6 bar along the cooling stretch.

4. Method according to one of the claims 1 - 3, **characterised in that** the temperature of the cooling water is 80°C - 110°C, preferably 85°C - 95°C.

5. Method according to one of the claims 1 - 4, **characterised in that** the dwell time of the polyester material is chosen such that the polyester material has a temperature of 90°C - 220°C after separation of the cooling water.

6. Method according to one of the claims 1 - 5, **characterised in that** a water-solids separating device is used for separating the polyester material from the cooling water, said separating device being preceded by a constriction stretch for reducing the cooling water pressure.

7. Method according to one of the claims 1 - 6, **characterised in that** the cooling water flow in the cooling stretch can be adjusted by an adjustable bypass to the cooling stretch.

8. Method according to one of the claims 1 - 7, **characterised in that** the polyester material is granulated directly after the inflow thereof into the cooling water flow with formation of approximately spherical granulate particles.

9. Method according to one of the claims 1 - 7, **characterised in that** the polyester material is granulated after cooling in the cooling water.

10. Method according to one of the claims 1 - 7, **characterised in that** the polyester material is granulated only after separation of the cooling water with formation of approximately cylindrical granulate particles.

11. Method according to one of the claims 8 - 10, **characterised in that** a surface quenching above the glass-transition temperature is implemented in the granulate.

12. Method according to one of the preceding claims, **characterised in that** the produced granulate has an amorphous proportion of at least 55% and at most 92%.

13. Method according to one of the preceding claims, **characterised in that** the granulation is effected via a perforated plate with an attached set of rotating blades.

14. Method according to one of the preceding claims, **characterised in that** the melt is formed as at least one melt strand.

15. Use of the product produced with the method according to one of the claims 1 - 14 for direct assignation into a solid phase post-condensation reactor or drier, preferably a tower- and/or shaft drier.

## Revendications

1. Procédé de fabrication d'un granulé non collant au-dessus de la température de transition vitreuse à partir d'un matériau de polyester, dans lequel le matériau de polyester est introduit sous forme de masse fondue dans un courant d'eau de refroidissement et séparé de l'eau de refroidissement après son passage dans un parcours de refroidissement, l'eau de refroidissement présentant une pression d'au moins 2 bars le long du parcours de refroidissement, **caractérisé en ce que** le temps passé du matériau de polyester dans le parcours de refroidissement est de 0,2 à 5,0 s.

2. Procédé selon la revendication 1, **caractérisé en ce que** le temps passé du matériau de polyester dans le parcours de refroidissement est de 0,2 à 2,0 s, de préférence de 0,4 à 0,8 s.

3. Procédé selon l'une quelconque des revendications 1 ou 2, **caractérisé en ce que** l'eau de refroidissement présente une pression de 3 à 6 bars le long du parcours de refroidissement.

4. Procédé selon l'une quelconque des revendications 1 à 3, **caractérisé en ce que** la température de l'eau de refroidissement est de 80 °C à 110 °C, de préférence de 85 °C à 95 °C.

5. Procédé selon l'une quelconque des revendications 1 à 4, **caractérisé en ce que** le temps de parcours du matériau de polyester est choisi de sorte que le matériau de polyester présente une température de 90 °C à 220 °C après séparation de l'eau de refroidissement.

6. Procédé selon l'une quelconque des revendications 1 à 5, **caractérisé en ce que** l'on utilise, pour séparer le matériau de polyester de l'eau de refroidissement, un dispositif de séparation des phases eau- solides sur lequel on place en amont une section d'étranglement pour la détente de la pression de l'eau de refroidissement.

7. Procédé selon l'une quelconque des revendications 1 à 6, **caractérisé en ce que** le courant d'eau de refroidissement sur le parcours de refroidissement peut être réglé par le biais d'un circuit de dérivation réglable en direction du parcours de refroidissement.

8. Procédé selon l'une quelconque des revendications 1 à 7, **caractérisé en ce que** la granulation du matériau de polyester se fait immédiatement après son entrée dans le courant d'eau de refroidissement, par la formation de grains de granulé à peu près sphériques.

9. Procédé selon l'une quelconque des revendications 1 à 7, **caractérisé en ce que** la granulation du matériau de polyester se fait, après refroidissement, dans l'eau de refroidissement.

10. Procédé selon l'une quelconque des revendications 1 à 7, **caractérisé en ce que** la granulation du matériau de polyester se fait seulement après séparation de l'eau de refroidissement, par la formation de grains de granulé à peu près cylindriques.

11. Procédé selon l'une quelconque des revendications 8 à 10, **caractérisé en ce que** l'on réalise pour le granulé une trempe superficielle au-dessus de la température de transition vitreuse.

12. Procédé selon l'une quelconque des revendications précédentes, **caractérisé en ce que** le granulé fabriqué présente une fraction amorphe d'au moins 55 % et d'au maximum 92 %.

13. Procédé selon l'une quelconque des revendications précédentes, **caractérisé en ce que** la granulation s'effectue au travers d'une plaque perforée équipée d'un jeu de lames rotatif.

14. Procédé selon l'une quelconque des revendications précédentes, **caractérisé en ce que** la masse fondue se présente sous la forme d'au moins un boudin de masse fondue.

15. Utilisation du produit fabriqué avec le procédé selon l'une quelconque des revendications 1 à 14 pour une affectation directe à un réacteur de post-condensation en phase solide ou à un séchoir, de préférence, un séchoir vertical et/ou à puits.
